# EUROPÄISCHE PATENTSCHRIFT

(11) **EP 0 510 023 B1**
(45) Veröffentlichungstag und Bekanntmachung des Hinweises auf die Patenterteilung: **13.04.1994**
(21) Anmeldenummer: 91901570.1
(22) Anmeldetag: 04.01.1991
(51) Int. Cl.: G01S 15/87, G01S 15/04, G01S 7/52

(54) **VORRICHTUNG ZUM ERKENNEN DER ANWESENHEIT EINES FAHRZEUGS MITTELS EINER ULTRASCHALLVORRICHTUNG**
DEVICE FOR DETECTING THE PRESENCE OF A VEHICLE BY MEANS OF AN ULTRASONIC DEVICE
DISPOSITIF DE REPERAGE DE LA PRESENCE D'UN VEHICULE AU MOYEN D'UN SYSTEME A ULTRASONS

(30) Priorität: 12.01.1990 DE 4000698
(43) Veröffentlichungstag der Anmeldung: 28.10.1992
(73) Patentinhaber: HERMESMEYER, Alexander C., D-52428 Jülich (DE)
(72) Erfinder: HERMESMEYER, Alexander C., D-52428 Jülich (DE)
(74) Vertreter: Bauer, Wulf, Dr.
(86) Internationale Anmeldenummer: DE9100001
(87) Internationale Veröffentlichungsnummer: WO9110920

(56) Entgegenhaltungen:
- EP-A- 0 043 396
- DE-A-34 200 04
- GB-A- 2 185 817
- GB-A- 2 186 690
- Patent Abstracts of Japan,Band 89,Nr 329,(P-848),29.März 1989

## Beschreibung

Die Erfindung betrifft eine Vorrichtung und ein Verfahren zum Erfassen der Anwesenheit eines Fahrzeugs mittels einer Ultraschallvorrichtung.

Aus der DE-A-36 21 819 ist ein Verfahren und eine Vorrichtung zur Abstandsmessung in Luft mittels Ultraschall bekannt, diese Vorrichtung wird auch zur Erfassung der Anwesenheit von Fahrzeugen eingesetzt. Bei ihr wird nach dem Impuls-Reflexionsverfahren periodisch vom Sensor ein Ultraschallimpuls ausgesandt, dessen Reflexionen vom selben Sensor wieder empfangen werden.

Probleme bei dieser vorbekannten Vorrichtung treten bei der Erfassung von Kraftfahrzeugen dann auf, wenn unabhängig von der Ausbildung des Fahrzeugs, insbesondere PKW's, stets und mit Sicherheit ein positives Signal dann erhalten werden soll, wenn das Fahrzeug in einer gewissen Entfernung von der Vorrichtung anwesend ist. Bei der Vorrichtung nach dem Stand der Technik wird bei schräg gestellten Karosserieteilen, im Bereich von Lüftungsschlitzen, im Bereich der Reifen usw. eine ausreichende Reflexion zurück in den Sensor nicht immer erreicht, so daß eine sichere Erfassung eines Fahrzeugs, insbesondere eines PKW's, nicht gewährleistet ist.

Aus der EP-A-043 396 ist eine fahrzeugresidente Ultraschallvorrichtung bekannt, die ein Warnsignal abgibt, wenn der Abstand zu einem vorausfahrenden Fahrzeug einen Mindestabstand unterscheidet. Dadurch soll Auffahrunfällen entgegengewirkt werden. Die Ultraschallvorrichtung hat drei Sensoren, nämlich einen mittigen, sendenden Sensor und zwei im gleichen Abstand von diesem angeordnete äußere, empfangende Sensoren.

Es ist eine Koinzidenzschaltung vorgesehen. Ein Ausgangssignal wird nur dann abgegeben, wenn beide äußeren Sensoren gleichzeitig ein Ultraschallsignal empfangen.

Eine weitere, bordeigene Abstandsmeßvorrichtung dieser Art für ein Kraftfahrzeug ist aus der DE-A-34 20 004 bekannt. Sie hat drei Sensoren, die periodisch abwechselnd so betrieben werden, daß in einer ersten Betriebsart jeder Sensor das von ihm ausgesandte Ultraschallsignal empfängt und in einer zweiten Betriebsart wenigstens ein Sensor die von mindestens einem anderen Sensor ausgesandten Ultraschallsignale empfängt und verarbeitet. Eine Warneinrichtung wird eingeschaltet, wenn eine vorgebbare Abweichung der Laufzeiten in den beiden Betriebsarten vorliegt.

Die Vorrichtung der eingangs genannten Art verfolgt den Zweck, daß ein Anwesenheitssignal abgegeben wird, solange sich ein Fahrzeug, insbesondere Kraftfahrzeug, in einem vorgegebenen Bereich befindet. Sie ist bestimmt für alle Anlagen, bei denen sich ein Fahrzeug auf einer vorgegebenen Spur, insbesondere einem Fahrstreifen, befindet und einem Menschen oder einer Maschine Mitteilung gemacht werden soll, daß sich ein Fahrzeug innerhalb des ausgewählten Bereiches befindet. Die Vorrichtung ist insoweit einsetzbar für Autoschalter, Eingangs- und Ausgangsstationen von gebührenpflichtigen Straßen, Brücken und dergleichen, Bestellsäulen von Fastfood-Restaurants usw.. Dabei soll die Vorrichtung nicht nur, wie dies für andere Anwendungsfälle, z. B. bei Ampelsteuerungen, Verkehrszählungen usw. ausreichend ist, einen Impuls abgeben, während ein Fahrzeug die Vorrichtung passiert, wobei es auf die exakte räumliche Zuordnung zwischen Vorrichtung und Fahrzeug nicht ankommt, sondern es soll mit Sicherheit und immer dann ein Anwesenheitssignal abgegeben werden, solange sich ein Fahrzeug teilweise oder ganz innerhalb eines vorgegebenen Erfassungsbereichs befindet.

Demzufolge liegt der Erfindung ausgehend von dem vorbekannten Verfahren und der vorbekannten Vorrichtung der eingangs genannten Art die Aufgabe zugrunde, die vorbekannte Vorrichtung bzw. das vorbekannte Verfahren dahingehend weiterzubilden, daß unabhängig von der Form und Ausgestaltung des Fahrzeugs mit Sicherheit ein positives Anwesenheitssignal ausgegeben wird, wenn und solange sich ein Fahrzeug innerhalb eines vor der Ultraschallvorrichtung befindlichen Erfassungsbereiches befindet.

Vorrichtungsmäßig gelöst wird diese Aufgabe dadurch, daß ein mittiger Sensor und jeweils im gleichen Abstand von diesem mittigen Sensor und in möglichst großem, jeweils gleichen Abstand voneinander mindestens zwei äußere Sensoren angeordnet sind, daß die äußeren Sensoren gleichgeschaltet sind und gleichrangig betrieben werden, und daß entweder der mittige Sensor als empfangender Sensor und die äußeren Sensoren als sendende Sensoren geschaltet sind oder umgekehrt.

Die Erfindung macht sich die Erkenntnis zunutze, daß jeder Sensor im räumlichen Bereich einer Keule empfängt bzw. sendet. Durch die mindestens zwei sendenden (Anspruch 2) bzw. mindestens zwei empfangenden (Anspruch 1) Sensoren wird sichergestellt, daß auch Reflexionen von schräg verlaufenden Flächen, aus dem Bereich von Lüftungsschlitzen, dem Bereich der Kotflügel, der Türgriffe, der Reifen usw. erfaßt werden. Dabei wird bewußt auf ein möglichst großes Echo einer Fläche, die exakt rechtwinklig zum Hauptstrahl des mindestens einen, sendenden Sensors liegt, verzichtet, vielmehr tritt bei der erfindungsgemäßen Anordnung praktisch nie der Fall auf, daß der Hauptstrahl eines sendenden Sensors in die Hauptempfangsrichtung eines empfangenden Sensors reflektiert wird. Dadurch werden jedoch Randstrahlen, die von der vorbekannten Vorrichtung nicht erfaßt werden, berücksichtigt und können insofern Reflexionen von schräg gestellten Flachen nachgewiesen werden, die mit der vorbekannten Vorrichtung nicht erfaßbar sind.

Durch die Aufteilung der Sensoren in sendende und empfangende Sensoren und die räumliche Trennung dieser Sensoren wird eine unmittelbare oder direkte Einkopplung des Sendesignals in den Empfangskanal ausgeschlossen. Hierdurch vereinfacht sich die Empfängerschaltung, ihr Eingang muß nicht großsignalfest sein, wodurch wiederum die Zuverlässigkeit und Genauigkeit des Empfangskanals verbessert werden.

In einer Weiterentwicklung wird vorgeschlagen, die Hauptstrahlrichtungen aller Sensoren parallel zueinander auszurichten. Bei dieser Anordnung wird ausschließlich mit nicht zentralen Sende- bzw. Empfangsstrahlen gearbeitet, so daß die Gesamtvorrichtung von vornherein auf hohe Empfindlichkeit eingestellt werden kann, da spiegelnde Reflexionen der Hauptstrahlen nicht zu erwarten sind.

In einer weiteren Ausgestaltung sind die mindestens drei Sensoren in einem gemeinsamen Gehäuse angeordnet und in eine elastische Masse eingebettet, die bei der verwendeten Frequenz nicht resonant ist. Hierdurch ist der mechanische Teil der Vorrichtung einfach anzuordnen und einfach zu handhaben.

Darüberhinaus wird vorgeschlagen, daß der Abstand der äußeren Sensoren vom mittigen Sensor mindestens 5 %, vorzugsweise mindestens 10 % des Abstandes beträgt, in dem die zu erfassenden Fahrzeuge erwartet werden. Je größer der Abstand der Sensoren voneinander ist, umso sicherer werden schräg gestellte Flächen erkannt, also Karosserieteile erfaßt, die in einem Winkel zur Hauptstrahlrichtung der sendenden Sensoren stehen. Die erfindungsgemäße Vorrichtung erfaßt immer nur einen Teilbereich eines gesamten Fahrzeugs. Im genannten Abstandsbereich wird eine Reflexion von den üblicherweise vorkommenden Ausbildungen der Karosserie bzw. des Fahrwerks eines Kraftfahrzeugs erreicht. Die genannten Maße eignen sich insbesondere für eine seitliche Erfassung (quer zur Fahrtrichtung) eines Fahrzeugs. Bei der gewählten Anordnung werden auch Fahrradfahrer, Motorrad- und Rollerfahrer usw. erfaßt.

Bei der vorzugsweise seitlichen Anordnung der erfindungsgemäßen Vorrichtung, wobei seitlich außerhalb des Fahrstreifens der Fahrzeuge zu verstehen ist beträgt die Höhe über dem Niveau, auf dem die Fahrzeuge rollen, 20 bis 80, vorzugsweise 40 bis 60 cm. In diesem Bereich wird eine sichere Erfassung aller gängigen Fahrzeuge erzielt.

Bei zwei äußeren Sensoren, also insgesamt drei Sensoren, sind in einer vorteilhaften Weiterbildung die Sensoren senkrecht übereinander angeordnet. Damit wird dem Umstand Rechnung getragen, daß bei üblichen Fahrzeugen schräg verlaufende bzw. gekrümmte Karosserieteile und sonstige Teile typischerweise parallel zur Fahrtrichtung des Fahrzeugs und seltener im Winkel zu dieser Fahrtrichtung verlaufen.

Schließlich hat es sich als vorteilhaft erwiesen, auf der anderen Seite des Erfassungsbereichs und außerhalb des Fahrstreifens für die Kraftfahrzeuge, in Hauptstrahlrichtung der Sensoren einen Reflektor anzuordnen, der immer dann eine Reflexion liefert, wenn sich im Erfassungsbereich kein Gegenstand befindet. Das von ihm erhaltene Echo wird von den Echos zu erfassender Fahrzeuge dadurch unterschieden, daß es zu einem späteren Zeitpunkt eintrifft. Durch den Reflektor ist eine ständige Überprüfung der Vorrichtung möglich, weiterhin läßt sich eine automatische Kompensation von Einflußgrößen, z. B. bei Regen, bei zunehmender Dämpfung durch Verschmutzung der Sensoren, bei Alterung einzelner Bauteile usw. vornehmen.

Weitere Vorteile und Merkmale ergeben sich aus den übrigen Ansprüchen sowie der nun folgenden Beschreibung von nicht einschränkend zu verstehenden Ausführungsbeispielen der Erfindung, die unter Bezugnahme auf die Zeichnung näher erläutert werden. In dieser zeigen:
- Fig. 1: eine perspektivische Darstellung eines Sensorgehäuses,
- Fig. 2: ein Schnitt entlang der Schnittlinie II - II in Fig. 1 durch das Sensorgehäuse,
- Fig. 3: eine perspektivische Darstellung einer seitlich eines Fahrstreifens für Fahrzeuge installierten Vorrichtung gemäß der Erfindung und
- Fig. 4: eine Draufsicht auf eine Sensoranordnung mit insgesamt vier Sensoren.

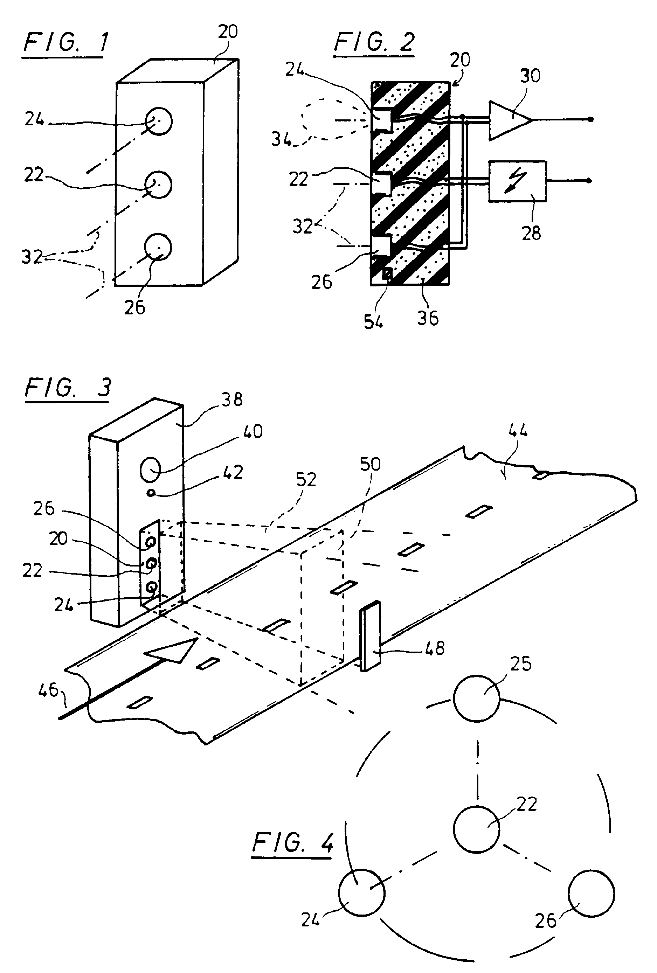

Die Figuren 1 bis 3 zeigen ein erstes Ausführungsbeispiel der Vorrichtung zum Erkennen der Anwesenheit eines Fahrzeugs mittels Ultraschallsensoren. In einem Gehäuse 20 sind vertikal und gleichabständig übereinander insgesamt drei Sensoren für Ultraschall angeordnet, es handelt sich um einen mittigen Sensor 22 und oberhalb bzw. unterhalb je einen äußeren Sensor 24, 26. Ihr Mittenabstand beträgt jeweils 69 mm. Als Sensoren 22 bis 26 werden handelsübliche Piezo-Schwinger eingesetzt, die auf einer Frequenz von 40 KHz arbeiten.

Wie die schematische Darstellung in Fig. 2 zeigt, wird der mittige Sensor 22 als Sender betrieben, er ist mit einer Senderschaltung 28 verbunden. Die beiden äußeren Sensoren 24, 26 sind im hier gezeigten Ausführungsbeispiel parallel geschaltet und an einen Eingangsverstärker 28 eines hier nicht weiter dargestellten Empfangskanals angeschlossen.

In der Alternative gemäß Hauptanspruch 1 sind die beiden äußeren Sensoren 24, 26 mit der Senderschaltung 28 verbunden und arbeiten als sendende Sensoren, der mittige Sensor 22 ist in diesem Fall für den Empfang der reflektierten Ultraschallsignale zuständig, er ist mit dem Eingangsverstärker 30 verbunden. Diese Alternative ist in der Zeichnung nicht dargestellt.

Im Ausführungsbeispiel nach den Figuren 1 bis 3 befinden sich die Frontflächen der drei Sensoren 22 bis 26 in derselben Ebene. Ihre Hauptstrahlrichtungen 32, die senkrecht von der jeweiligen Frontfläche ausgehen, verlaufen parallel zueinander. Jeder Sensor 22 bis 26 hat eine Strahlungskeule 34, die (sehr stark verkleinert) in Fig. 2 gestrichelt angedeutet ist. Erfindungsgemäß überlagern sich die Strahlungskeulen 34 benachbarter Sensoren.

Die Sensoren 22 bis 26 sind in eine elastische Masse 36 eingebettet, die ihnen einerseits einen mechanischen Halt gibt, sie bis auf die Frontfläche umschließt und andererseits eine Schwingbewegung zuläßt. Als Masse 36 wird eine Kunststoff-Vergußmasse verwendet, die im fertigen Zustand eine Shore-Härte von 40 hat. Die Sensoren 22 bis 26 sind mit biegsamen Anschlußdrähten, insbesondere Litzen, elektrisch angeschlossen.

Fig. 3 zeigt die Anordnung eines Gehäuses entsprechend den Figuren 1 und 2 in einer Sprechsäule 38, wie sie beispielsweise bei den Bestellstationen für Autoschalter in Fastfood-Restaurants eingesetzt wird. In ihr sind in Fensterhöhe eines PKW eine Hör- und Sprecheinheit 40 und eine Ruftaste 42 vorgesehen. Darunter und oberflächenbündig ist das Gehäuse 20 entsprechend den Figuren 1 und 2 angeordnet, es ist 170 mm hoch und 70 mm breit. Die drei Sensoren 22 bis 26 sind erkennbar.

Die Sprechsäule 38 befindet sich seitlich eines Fahrstreifens 44 für die zu erkennenden Fahrzeuge. Der mittige Sensor 22 ist in einer Höhe von etwa 40 cm oberhalb der Oberfläche des Fahrstreifens angeordnet, seine Hauptstrahlrichtung verläuft parallel zur Oberfläche des Fahrstreifens 44 und rechtwinklig zu einer Fahrtrichtung 46. Auf dieser Hauptstrahlungsrichtung 32 befindet sich auf der anderen Seite des Fahrstreifens 44, der Sprechsäule 38 genau gegenüberliegend, ein Reflektor 48, auf den später noch eingegangen wird.

Durch strichpunktierte Linien, die von der Frontseite des Gehäuses 20 ausgehen, ist der mögliche Erfassungszone 50 der erfindungsgemäßen Vorrichtung angedeutet. Gegenstände, die sich innerhalb der dargestellten Zone 50 befinden, können nachgewiesen werden. Durch zusätzliche, ansich bekannte elektronische Maßnahmen, nämlich durch ein Zeittor, wird erreicht, daß nur solche Reflexionen eines gesendeten Impulses ein positives Anwesenheitssignal liefern können, bei denen die Reflexion innerhalb des Erfassungsbereichs 52 erfolgt. Dabei kann auf die dem Gehäuse 20 näherliegende, zeitliche Begrenzung verzichtet werden, nicht aber auf die zeitliche Grenze zu längeren Zeiträumen hin. Durch sie wird vermieden, daß der Verkehr auf sonstigen Spuren usw., beispielsweise einer zweiten, rechts vom Fahrstreifen 44 in Fig. 3 gelegenen Fahrspur erfaßt wird. Schließlich kann eine Amplitudenschwelle vorgesehen sein, die sicherstellt, daß nur größere Objekte, die ein ausreichend großes Echosignal liefern, tatsächlich erfaßt werden. Hierdurch wird vermieden, daß die Vorrichtung durch kleine Gegenstände ausgelöst wird. Um auch rasch bewegte, kleinere Objekte, beispielsweise Vögel usw., nicht zur Anzeige zu bringen und Störungen zu unterdrücken, ist in der elektronischen Auswerteschaltung eine Mittlung über mehrere Impulse vorgesehen, so daß bei einem oder wenigen Störsignalen noch keine Anwesenheitsanzeige abgegeben wird.

Durch den Reflektor 48 wird außerhalb des Zeitbereichs des Erfassungsbereichs 42 ein Echo geliefert, das stets zu einem vorgegebenen Zeitpunkt an den beiden empfangenden Sensoren 24, 26 eintrifft. Für seine Auswertung ist ein separates Zeitfenster vorgesehen. Anhand des Echos des Reflektors 48 ist eine ständige und automatische Funktionskontrolle der gesamten Vorrichtung möglich. Alterungserscheinungen einzelner Bauelemente können kompensiert werden, indem bei Abfall beispielsweise die Sendeleistung erhöht wird. Weiterhin kann die Vorrichtung nach einer gewissen Zahl von empfangenen Echos, die vom Reflektor 48 herrühren, auf Ruhebetrieb umgeschaltet werden, bei dem beispielsweise die Taktfrequenz der Aussendung von Ultraschallsignalen durch den mittigen Sensor 22 reduziert wird, beipsielsweise auf ein Viertel verringert wird. Diese Reduktion wird wieder aufgehoben, sobald innerhalb des Erfassungsbereichs 52 ein Objekt festgestellt wurde.

Innerhalb des Gehäuses 20 ist eine unten im Gehäuse angeordnete Heizung 54, z.B. ein im Verlustleistungsbereich betriebener Leistungstransistor, vorgesehen. Der Heizung ist ein nicht dargestelltes Steuergerät, das einen im Gehäuse 20 angeordneten Temperatursensor umfaßt, zugeordnet. Dadurch wird die Temperatur der Sensoren 22 bis 26 unabhängig von Schwankungen der Umgebungstemperatur oberhalb eines Schwellenwertes gehalten.

Fig. 4 zeigt schließlich die Anordnung von drei empfangenden (oder in der Alternative: sendenden) Sensoren 24, 25, 26, die auf einem Kreisbogen um den mittigen, sendenden (oder in der Alternative: empfangenden) Sensor 22 angeordnet sind. Der Radius des Kreisbogens, auf dem die äußeren Sensoren 24 bis 26 angeordnet sind, ist dem Abstand des Erfassungsbereichs 52 vom Gehäuse 20 angepaßt, er beträgt mindestens 5 % dieses Abstandes. Die äußeren Sensoren 24 bis 26 sind in gleichen Teilungswinkeln auf dem genannten Kreisbogen um den mittigen Sensor 22 angeordnet.

## Patentansprüche

1. Vorrichtung zum Erkennen der Anwesenheit eines Fahrzeugs, das sich auf einem Fahrstreifen (44) befindet, mit einer seitlich des Fahrstreifens (44) angeordneten Ultraschallvorrichtung, die einen mittigen Sensor (22) und jeweils im gleichen Abstand von diesem und in möglichst großem, jeweils gleichem Abstand voneinander mindestens zwei äußere Sensoren (24, 26) und eine diesen Sensoren (22, 24, 26) zugeordnete, elektronische Sende- und Empfangsschaltung (28, 30) aufweist, wobei die Sensoren (22 bis 26) in einem gemeinsamen Gehäuse (20) angeordnet sind, die äußeren Sensoren (24, 26) parallel oder in Reihe geschaltet sind und der mittige Sensor (22) periodisch Impulse aussendet, deren Reflexionen von den äußeren Sensoren (24,26) empfangen und von der Schaltung (28, 30) ausgewertet werden, die ein positives Anwesenheitssignal abgibt, wenn in einem Erfassungsbereicn (52), der durch die Breite des Fahrstreifens (44) begrenzt ist, Reflexionen stattfinden und mindestens ein äußerer Sensor (24,26) diese Reflexionen aufnimmt.

2. Vorrichtung zum Erkennen der Anwesenheit eines Fahrzeugs, das sich auf einem Fahrstreifen (44) befindet, mit einer seitlich des Fahrstreifens (44) angeordneten Ultraschallvorrichtung, die einen mittigen Sensor (22) und jeweils im gleichen Abstand von diesem und in möglichst großem, jeweils gleichem Abstand voneinander mindestens zwei äußere Sensoren (24, 26) und eine diesen Sensoren (22, 24, 26) zugeordnete, elektronische Sende- und Empfangsschaltung (28, 30) aufweist, wobei die Sensoren (22 bis 26) in einem gemeinsamen Gehäuse (20) angeordnet sind, die äußeren Sensoren (24, 26) parallel oder in Reihe geschaltet sind und periodisch Impulse aussenden, deren Reflexionen von dem mittigen Sensor (22) empfangen und von der Schaltung (28, 30) ausgewertet werden, die ein positives Anwesenheitssignal abgibt, wenn in einem Erfassungsbereich (52), der durch die Breite des Fahrstreifens (44) begrenzt ist, Reflexionen stattfinden und der mittige Sensor (22) diese Reflexionen aufnimmt.

3. Vorrichtung nach Anspruch 1 oder 2, dadurch gekennzeichnet, daß die Hauptstrahlrichtungen (32) aller Sensoren (22 bis 26) parallel zueinander ausgerichtet sind.

4. Vorrichtung nach Anspruch 1 oder 2, dadurch gekennzeichnet, daß die Sensoren im Gehäuse (20) in eine elastische Masse (36) eingebettet sind, die nicht resonant ist.

5. Vorrichtung nach Anspruch 1 oder 2, dadurch gekennzeichnet, daß der Abstand der äußeren Sensoren (24, 26) vom mittigen Sensor (22) mindestens 5 %, vorzugsweise mindestens 10 % des Abstands beträgt, in dem die Fahrzeuge erwartet werden.

6. Vorrichtung nach Anspruch 1 oder 2, dadurch gekennzeichnet, daß in der Empfangsschaltung (30) eine Mittlung über mehrere Perioden erfolgt.

7. Vorrichtung nach Anspruch 1 oder 2, dadurch gekennzeichnet, daß in der Empfangsschaltung (30) ein Zeittor vorgesehen ist, dessen untere Grenze bei Null oder darüber liegt und dessen obere Grenze kleiner ist als die Zeit, die der Schall braucht, um einmal quer über den Fahrstreifen 44 und zurück zu laufen.

8. Vorrichtung nach Anspruch 1 oder 2, dadurch gekennzeichnet, daß bei zwei äußeren Sensoren (24, 26) die dann insgesamt drei Sensoren (22 bis 26) senkrecht übereinander angeordnet sind.

9. Vorrichtung nach Anspruch 1 oder 2, dadurch gekennzeichnet, daß der mittige Sensor (22) 20 bis 80 cm über dem Niveau des Fahrstreifens (44), vorzugsweise 40 bis 60 cm über diesem Niveau, angeordnet ist.

## Claims

1. A device for detecting the presence of a vehicle that is situated on a traffic lane (44) has an ultrasonic device that is mounted to the side of the traffic lane (44); with a centrally mounted sensor (22) and at least two external sensors (24, 26) mounted equidistant from the central sensor (22) and at the greatest possible distance from it; with an electronic transmitting and receiving circuit (28, 30) that is associated with these sensors (22 - 26); sensors (22 - 26) are arranged in a common housing (20), the external sensors (24, 26) being connected parallel or in series; with the central sensor (22) emitting periodical pulses whose reflections are received from the external sensors (24, 26) and evaluated by the circuit (28, 30); positive presence signal is emitted if reflections occur within an area (52) whose extent is determined by the width of the traffic lane (44) and if a least one of the external sensors (24, 26) picks up these reflections.

2. A device for detecting the presence of a vehicle that is situated on a traffic lane (44) has an ultrasonic device that is mounted to the side of the traffic lane (44); with centrally mounted sensor (22) and at least two external sensors (24, 26) mounted equidistant from the central sensor (22) and at the greatest possible distance from it; with an electronic transmitting and receiving circuit (28, 30) that is associated with these sensors (22 - 26); sensors (22 - 26) are arranged in a common housing (20), the external sensors (24, 26) being connected in parallel or in series and periodically emit pulses which are received by the centrally mounted sensor (22) and evaluated by the circuit (28, 30); positive presence signal is emitted if reflections occur within a detection area determined by the width of the traffic lane and if these reflections are received by the centrally mounted sensor (22).

3. A device in accord with claim 1 or 2 characterized in that the directions of travel (32) of the chief pulses of all sensors (22 - 26) run parallel to one another.

4. A device in accord with claim 1 or 2 characterized in that the sensors (22 - 26) in their housing (20) are bedded in an elastic mass (36) that is not resonant.

5. A device in accord with claim 1 or 2 characterized in that the distance from each of the external sensors (24, 26) to the centrally mounted sensor (22) is at least 5%, and preferably 10%, of the width of the area in which vehicles are expected.

6. A device in accord with claim 1 or 2 characterized in that detecton occurs in the receiving circuit (30) over several periods.

7. A device in accord with claim 1 or 2 characterized in that a time gate is incorporated in the receiving circuit (30) whose lower threshold is zero or above and whose upper threshold is less than the time required for sound to traverse the traffic lane (44) and return.

8. A device in accord with claim 1 or 2 characterized in that in case of two external sensors (24, 26) the total of three sensors (22 - 26) are arranged vertically one over the other.

9. A device in accord with claim 1 or 2 characterized in that the centrally mounted sensor (22) is sited 20 to 80 cm, but ideally 40 to 60 cm, above the level of the traffic lane (44).

## Revendications

1. Dispositif de repérage de la présence d'un véhicule se trouvant sur une bande de chaussée (44) au moyen d'un système à ultrasons installé sur le côté de la bande de chaussée (44), ce système possédant un capteur centré (22) et au moins deux capteurs externes (24, 26) ayant respectivement le même écartement par rapport au capteur centré (22) et un écartement si possible grand et identique entre eux ainsi qu'un circuit émetteur et récepteur électronique (28, 30) affecté à l'un de ces capteurs (22, 24, 26), ces derniers (22 à 26) étant logés dans un boîtier commun (20), les capteurs externes (24, 26) étant couplés parallèlement ou en série et le capteur centré (22) émettant périodiquement des impulsions dont les réflexions sont captées par les capteurs externes (24, 26) et évaluées par le circuit (28, 30), celui-ci générant un signal de présence positif lorsque des réflexions se produisent dans une zone de détection (52) qui est limitée par la largeur de la bande de chaussée (44) et que ces réflexions sont captées au moins par un capteur externe (24, 26).

2. Dispositif de repérage de la présence d'un véhicule se trouvant sur une bande de chaussée (44) au moyen d'un système à ultrasons installé sur le côté de la bande de chaussée (44), ce système possédant un capteur centré (22) et au moins deux capteurs externes (24, 26) ayant respectivement le même écartement par rapport au capteur centré (22) et un écartement si possible grand et identique entre eux ainsi qu'un circuit émetteur et récepteur électronique (28, 30) affecté à l'un de ces capteurs (22, 24, 26), ces derniers (22 à 26) étant logés dans un boîtier commun (20), les capteurs externes (24, 26) étant couplés parallèlement ou en série et émettant des impulsions périodiques dont les réflexions sont captées par le capteur centré (22) et évaluées par le circuit (28, 30), celui-ci générant un signal de présence positif lorsque des réflexions se produisent dans une zone de détection (52) qui est limitée par la largeur de la bande de chaussée (44) et que ces réflexions sont captées par le capteur centré (22).

3. Dispositif selon la revendication 1 ou 2, caractérisé par le fait que les sens du faisceau principal (32) de tous les capteurs (22 à 26) présentent une orientation parallèle entre eux.

4. Dispositif selon la revendication 1 ou 2, caractérisé par le fait que les capteurs logés dans le boîtier (20) se trouvent dans une masse élastique (36) qui n'est pas résonnante.

5. Dispositif selon la revendication 1 ou 2, caractérisé par le fait que l'écartement des capteurs externes (24, 26) par rapport au capteur centré (22) s'élève au moins à 5 %, de préférence au moins à 10 %, de l'écartement auquel les véhicules sont attendus.

6. Dispositif selon la revendication 1 ou 2, caractérisé par le fait qu'une moyenne sur plusieurs périodes est effectuée dans le circuit récepteur (30).

7. Dispositif selon la revendication 1 ou 2, caractérisé par le fait qu'une porte de temps est prévue dans le circuit récepteur (30) dont la limite inférieure se situe à zéro ou au-dessus de zéro et dont la limite supérieure est inférieure au temps qui est nécessaire au son pour parcourir une fois le trajet perpendiculaire à la bande de chaussée 44 et revenir à son point de départ.

8. Dispositif selon la revendication 1 ou 2, caractérisé par le fait que, s'il existe deux capteurs externes (24, 26), les trois capteurs (22 à 26) sont disposés l'un au-dessus de l'autre à la verticale.

9. Dispositif selon la revendication 1 ou 2, caractérisé par le fait que le capteur centré (22) se trouve à 20-80 cm au-dessus du niveau de la bande de chaussée (44), de préférence 40 à 60 cm au-dessus de ce niveau.
